# EUROPEAN PATENT APPLICATION

(11) **EP 1 701 399 A1**
(43) Date of publication of application: **13.09.2006**
(21) Application number: 06251275.1
(22) Date of filing: 09.03.2006
(51) Int. Cl.: H01M 4/86

(54) **Fuel cell humidity adjusting film**

(30) Priority: 10.03.2005 JP 2005067743
(71) Applicant: JAPAN GORE-TEX, INC., Setagaya-ku Tokyo 156 (JP)
(72) Inventor: Namba, Takafumi, Tokyo (JP); Nomi, Atsuo, Tokyo (JP)
(74) Representative: Shanks, Andrew

(57) **Abstract**

Humidity adjusting films are sandwiched between the catalyst electrode layers and carbon fiber collector layers of a solid polymer type fuel cell. These humidity adjusting films are constructed from a conductive carbonaceous powder and a polytetrafluoroethylene. The moisture permeability as measured by the method stipulated in JIS L 1099 (B-1) is 1200 to 4000 g/m²hr, and the mean thickness of the films is 5 to 100 µm.

## Description

### FIELD OF THE INVENTION

The present invention relates to a solid polymer type fuel cell (polymer electrolysis fuel cell (PEFC)).

### BACKGROUND OF THE INVENTION

In principle, water is the only reaction product of fuel cells that utilize hydrogen and oxygen. Accordingly, such fuel cells have attracted attention as a means of generating clean energy that places little burden on the environment. In particular, solid polymer type fuel cells have seen active research and attempts at practical adaptation, as fuel cells that are easy to handle and that promise to afford an increase in the output power density. Such fuel cells have a broad range of applications; examples include sources of the motive force for mobile bodies such as automobiles and buses, stationary power supplies for general household use, power supplies for compact mobile terminals and the like.

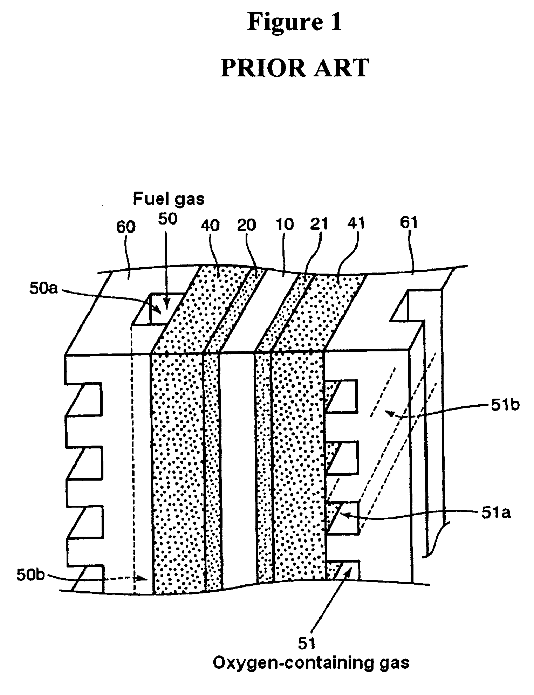

Solid polymer type fuel cells are constructed by stacking numerous single cells; each single cell typically has a structure of the type shown in Fig. 1. Specifically, a polymer electrolyte membrane (ion exchange membrane) 10 is sandwiched from both sides by a pair of catalyst electrode layers 20 and 21, and these catalyst electrode layers 20 and 21 are further sandwiched from both sides by a pair of carbon fiber collector layers (also called porous supporting layers or gas diffusion layers) 40 and 41. The outer sides of these carbon fiber collector layers 40 and 41 are opened toward gas flow channels (fuel gas flow channels 50 and oxygen-containing gas flow channels 51) formed by separators 60 and 61. Furthermore, the fuel gas (H₂ or the like) introduced from the flow channels 50 passes through the first carbon fiber collector layer (anode side carbon fiber collector layer) 40, so that protons (H⁺) are produced while electrons are released by the anodic electrode reaction shown below, which takes place at the first catalyst electrode layer (anode, fuel pole). These protons next pass through the polymer electrolyte membrane 10, and receive electrons as a result of the cathodic electrode reaction shown below, which takes place at the second catalyst electrode layer (cathode, oxygen pole), so that H₂O is produced.
Anodic electrode reaction: H₂ → 2H⁺ + 2e⁻
Cathodic electrode reaction: 1/2O₂ + 2H⁺ + 2e⁻ → H₂O

Furthermore, a perfluoro type electrolyte as represented by Nafion (commercial name, manufactured by Du Pont), or a hydrocarbon type electrolyte, is commonly used as the abovementioned polymer electrolyte membrane 10. In order for such polymer electrolyte membranes 10 to conduct protons, the co-presence of H₂O is required. Furthermore, the catalyst electrode layers 20 and 21 are constructed from a catalyst metal and a proton-conducting electrolyte, and H₂O is also required in order to promote the electrode reactions in these electrode layers 20 and 21. Ordinarily, therefore, a supply of water vapor (humidification) is performed via the gases supplied (fuel gas 50, oxygen-containing gas 51) in order to maintain the polymer electrolyte membrane 10 and catalyst electrodes layers 20 and 21 of the fuel cell in an appropriate water-containing state during operation.

The H₂O that is supplied for humidification to the fuel gas 50 dissolves in the electrolyte contained in the anode electrode layer 20 and in the polymer electrolyte membrane 10, and moves to the cathode side together with the movement of protons. A portion of the H₂O that is not utilized is discharged to the outside of the system as water vapor together with the exhaust gas 50, while the remainder of this H₂O is discharged to the outside of the system as condensed water via a drain (not shown in the figures). Furthermore, the H₂O that is supplied to the oxygen-containing gas 51 for humidification is similarly dissolved in the electrolyte contained in the catalyst electrode layer 21 and in the polymer electrolyte membrane 10, and the H₂O that is not utilized is either discharged to the outside of the system together with the exhaust gas 51, or discharged to the outside of the system as condensed water via the drain (not shown in the figures). In addition, a portion of the H₂O that is produced by the electrode reaction of the cathode catalyst layer 21 undergoes reverse diffusion through the polymer electrolyte membrane 10, and moves to the anode side where this H₂O is utilized, while the remainder of this H₂O passes through the carbon fiber collector layer 41 on the cathode side, and is discharged to the outside of the system as water vapor or condensed water.

As a result of such H₂O supply, H₂O generation and H₂O utilization, the cathode electrode layer 21 assumes a relatively H₂O-rich state. It is necessary to maintain this H₂O at an appropriate level by causing the water vapor pressure difference or H₂O concentration difference to act as a driving force on the side of the carbon fiber collector layer 41, and by causing the H₂O concentration difference to act as a driving force on the side of the polymer electrolyte membrane 10.

In the case of mobile bodies such as automobiles and the like, load fluctuations of the fuel cell frequently occur during starting, driving and stopping. Accordingly, it is desirable that it be possible to operate such fuel cells mounted in mobile bodies under a broad range of operating conditions ranging from low output to high output. Furthermore, there are severe restrictions in terms of mounted weight and capacity, so that the fuel cell must be compact and light-weight. Moreover, it is also necessary to devise added equipment such as the gas supply device (pump or the like) and humidifying device so that this added equipment has a small power consumption and is light in weight. For example, the gas flow rate from the gas supply device is generally set at approximately 40 to 50% in terms of the air utilization rate. However, if the air utilization rate can be increased even further, the power consumption and weight of the gas supply device can be reduced. Furthermore, in order to realize a reduction in the power consumption and weight of the humidifying device, it is desirable that the amount of humidification of the polymer electrolyte membrane 10 required during the operation of the fuel cell be minimized (low humidification operation, dry operation).

However, if the amount of humidification is reduced, the water vapor pressure difference between the catalyst electrode layer 21 and carbon fiber collector layer 41 is increased, so that the amount of H₂O that moves from the polymer electrode membrane 10 and catalyst electrode layer 21 to the carbon fiber collector layer 41 increases. As a result, the H₂O content of the polymer electrolyte membrane 10 is lowered, so that the proton conductivity is lowered, or the catalyst electrode layer 21 is dried so that the effective catalyst area is reduced, thus leading to a so-called dried-up state so that the output of the fuel cell is decreased, and it may become impossible in some cases to maintain the generation of electric power.

For example, even if the operating conditions are not dry operating conditions, if the amount of power generation is increased (e.g., if high-output operation at a current density of approximately 1 Acm² or greater is performed), the amount of accompanying H₂O that moves through the polymer electrolyte membrane 10 to the side of the catalyst electrode layer 21 increases. Furthermore, the amount of heat generated by the catalyst electrode layer 21 becomes conspicuous, and the water vapor pressure difference between the catalyst electrode layer 21 and the carbon fiber collector layer 41 is increased; consequently, the H₂O in the electrode layer 21 moves to the side of the carbon fiber collector layer 41 in large quantities, so that a dried-up state may appear in some cases.

When the operating state is a dried-up state, the useful life of the polymer electrolyte membrane 10 is shortened; consequently, high-humidification conditions are unavoidable. Even in the case of stationary fuel cells used in household applications, operation under low-humidification conditions is desirable from the standpoint of low power consumption; however, since the useful life of the membrane is shortened, high-humidification conditions must be employed. As was described above, however, since the cathode electrode layer 21 intrinsically tends to assume an H₂O-rich state, if the fuel cell is operated under high-humidification conditions, a so-called flooding state tends to result in which the water content of the cathode electrode layer 21 becomes excessive. In this flooding state, the electrode layer 21 and carbon fiber collector layer 41 are wetted with water; as a result, the supply of oxygen-containing gas to the catalyst metal is blocked, so that the output of the fuel cell is decreased. Furthermore, in the case of the abovementioned high-output operation (operation at a current density of 1 Acm² or greater), there may also be cases in which dry-up (in which water is taken from the polymer electrolyte membrane 10) and a flooding state that occurs because of the insufficient discharge of H₂O to the side of the carbon fiber collector layer 41 from the electrode layer 21 both appear at the same time.

Various techniques have been proposed in order to prevent dry-up and flooding. For example, the void ratio of the second carbon electrode maybe gradually increased from the upstream side of the oxidizing agent flow path toward the downstream side. Referring to the abovementioned Fig. 1, this means that the void ratio of the carbon fiber collector layer 41 on the cathode side is gradually increased moving in the direction of depth from the front side of the plane of the page. Furthermore, a mixed layer consisting of a fluororesin and carbon black may be formed between the catalyst layers 20 and 21 and the carbon fiber collector layers 40 and 41, and the thickness of the mixed layer in the portions 50a and 51a on the side of the inlets of the fuel gas and oxygen-containing gas (oxidizing agent gas) is set so that this thickness is greater than the thickness of the portions 50b and 51b on the side of the outlets. However, these techniques, since the void ratio or thickness varies in a gradation in the plane direction of the carbon fiber collector layers 40 and 41, the pressure distribution becomes nonuniform when the single cells are stacked up and tightened, so that the performance is not stable.

Furthermore, a carbon layer may be formed by coating on the surfaces of the carbon fiber collector layers (gas diffusion substrates) 40 and 41 located on the sides of the catalyst layers 20 and 21, and these carbon layers are separated into island form or lattice form within the plane of the layers, so that gap parts are formed between the separated carbon layers. However, since the carbon fibers generally stand up in the form of a nap on the surface of a carbon fiber collector layer, numerous indentations and projections are present. Since the carbon fiber collector layers are merely coated with carbon layers, the abovementioned nap or indentations and projections are not reduced, and there is a danger that the electrode layers 21 or polymer electrolyte membrane 10 will be scratched by the pressure that is applied when the single cells are stacked up. Furthermore, even if a technique is devised in which carbon layers formed into sheets beforehand are laminated with the carbon fiber collector layers in order to prevent such damage, it is necessary to split these sheets (carbon layers), and since the gaps that are formed by this splitting are extremely large, areas of water accumulation tend to be formed very easily, so that flooding conversely tends to occur.

Furthermore, there is absolutely no disclosure as to how both dry-up and flooding can be prevented over a broad range extending from high-humidification conditions to low-humidification conditions, and over a broad range extending from a high gas flow rate (high air utilization rate) to a low gas flow rate.

Furthermore, sheets obtained by the paste extrusion and calendering of a powdered PTFE - carbon black mixture (formed into sheets beforehand) may be integrated by lamination with the carbon fiber collector layers (carbon papers) 40 and 41. However, in this technique, there is no description of the prevention of dry-up or prevention of flooding. Furthermore, the thickness of the abovementioned sheet-form substance (powdered PTFE - carbon black mixture) is 0.2 mm (200 µm) or 0.6 mm (600 µm).

### SUMMARY OF THE INVENTION

With the foregoing aspects in view, it is an object of the present invention to establish a technique which makes it possible to prevent both dry-up and flooding of a fuel cell under a broad range of operating conditions ranging from high-humidification conditions to low-humidification conditions, and ranging from a high gas flow rate (low air utilization rate) to a low gas flow rate (high air utilization rate).

In order to solve the abovementioned problems, the present inventors first of all conducted a preliminary investigation in order to ascertain whether it is better to endow the carbon fiber collector layers (gas diffusion layers) 40 and 41 themselves with a humidification adjusting function by impregnating these layers 40 and 41 with a water-repellent (or hydrophilic) substance, or whether it is better to laminate a film with these carbon fiber collector layers 40 and 41, and to endow this film with a humidification adjusting function. As a result, it was discovered that in the case of the impregnation method, water tends to condense in the large voids inside the carbon fiber collector layer 41, possibly because the carbon fiber collector layer 41, which has an extremely coarse structure, is directly laminated with the catalyst electrode layer 21, so that the prevention of flooding is difficult. Accordingly, it was decided to pursue a further detailed investigation of the lamination of a film with the carbon fiber collector layers 40 and 41, and it was ultimately found as a result of numerous trial and error experiments that the thickness and moisture permeability of the laminated film are important causative factors.

Generally, the relationship between the moisture permeability of such a laminated film (humidity adjusting film) and the phenomena of dry-up and flooding is unclear. For example, even if the moisture permeability of this film is maintained at approximately 2000 g/m²hr, there may be some cases in which it is possible to generate power without causing dry-up or flooding (see Working Example 2 and Working Example 4 described later), and other cases in which dry-up occurs so that power cannot be generated (see Comparative Example 2 described later).

Generally, furthermore, the relationship between the thickness of this laminated film (humidity adjusting film) and the phenomenon of dry-up or flooding is also unclear. Specifically, if the thickness of the film is increased, the heat insulation between the catalyst electrode 21 and carbon fiber collector layer 41 is increased, so that the temperature difference increases; accordingly, the water vapor pressure difference also increases. This acts to accelerate the movement of H₂O from the catalyst layer 21 to the side of the carbon fiber collector layer 41. On the other hand, as the thickness of the film increases, the distance between the catalyst electrode 21 and carbon fiber collector layer 41 increases, so that the H₂O concentration gradient drops. This acts to decelerate the movement of H₂O from the catalyst electrode 21 to the side of the carbon fiber collector layer 41.

Accordingly, when various investigations were conducted regarding the abovementioned relationship, it was found that both dry-up and flooding can be prevented under a broad range of conditions only when both the film thickness and moisture permeability of the laminated film (humidity adjusting film) are controlled to specified ranges. The present invention was perfected as a result of this discovery.

In the present invention, a mixture of a conductive carbonaceous powder and a polytetrafluoroethylene is formed into a film beforehand, the moisture permeability and thickness of this film are controlled to specified ranges, and this film is sandwiched between a catalyst electrode layer and a carbon fiber collector layer (gas diffusion layer). Accordingly, both dry-up and flooding can be prevented under a broad range of operating conditions ranging from high-humidification conditions to low-humidification conditions, and ranging from a high gas flow rate (low air utilization rate) to a low gas flow rate (high air utilization rate).

### DESCRIPTION OF THE DRAWINGS

Fig. 1 is a schematic perspective view showing a conventional fuel cell (single cell).
Fig. 2 is a schematic perspective view showing one example of the fuel cell (single cell) of the present invention.
Fig. 3 is a schematic perspective view showing another example of the fuel cell (single cell) of the present invention.

### DETAILED DESCRIPTION OF THE INVENTION

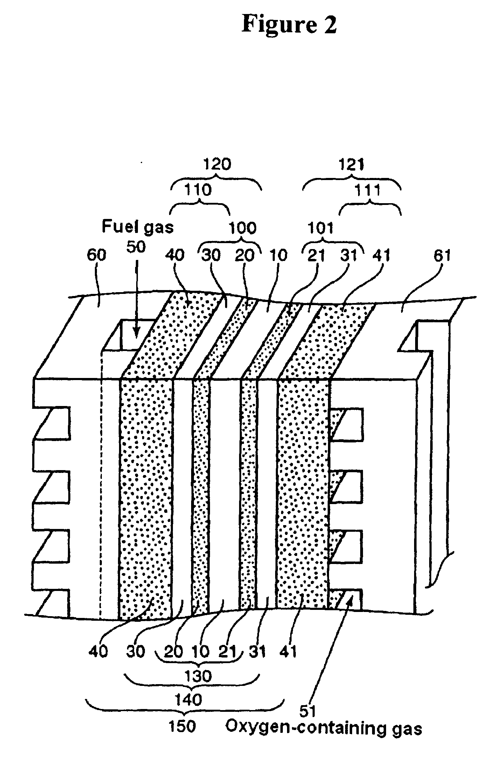

The present invention will be described in greater detail below with appropriate reference to the attached figures. Fig. 2 is a schematic perspective view showing one example of a fuel cell single cell using the humidity adjusting film of the present invention. Structural parts that are the same as in Fig. 1 are labeled with the same symbols, and a description of such parts is omitted.

In the refractive index, in order to adjust the single cell with a humidity adjusting function, instead of subjecting the gas-permeable carbon fiber collector layers (gas diffusion layers) 40 and 41 themselves to any modification (impregnation treatment such as a water-repellent treatment or hydrophilicizing treatment), films (humidity adjusting films) 30 and 31 are laminated with the surfaces of these carbon fiber collector layers 40 and 41 that are located on the sides of the catalyst electrode layers 20 and 21, and these films are endowed with a humidity adjusting function. In cases where an impregnation treatment is performed, water tends to condense in the large voids inside the carbon fiber collector layers 40 and 41. On the other hand, in cases where such films 30 and 31 are laminated, this problem can be avoided, and flooding can easily be prevented. Furthermore, in cases where these films 30 and 31 are laminated, damage to the catalyst electrode layers 20 and 21 by nap or indentations and projections on the surfaces of the carbon fiber collector layers 40 and 41 can also be prevented. Furthermore, in the humidity adjusting film of the present invention, the thickness and void ratio are substantially uniform in the plane direction; accordingly, the tightening pressure that is applied when the single cells are stacked acts uniformly, so that the cell performance is stable.

Furthermore, the humidity adjusting films 30 and 31 of the present invention show a specified mean thickness and a specified moisture permeability. If such humidity adjusting films 30 and 31 are used, both dry-up and flooding can be prevented over a broad range of operating conditions.

More concretely, the mean thickness of the abovementioned humidity adjusting films 30 and 31 is 100 µm or less (preferably 80 µm or less, even more preferably 70 µm or less, and most preferably 60 µm or less). If the humidity adjusting films 30 and 31 are too thick, it becomes difficult to prevent both dry-up and flooding no matter how the moisture permeability of these films is adjusted. On the other hand, if the humidity adjusting films 30 and 31 are made thin and controlled to a thickness within the abovementioned range, then both dry-up and flooding can be prevented over a broad range of operating conditions by further appropriately adjusting the moisture permeability of the films. Furthermore, the mean thickness of the humidity adjusting films 30 and 31 is 5 µm or greater (preferably 10 µm or greater, even more preferably 15 µm or greater, and most preferably 20 µm or greater). If the films 30 and 31 are too thin, the reaction gas tends to pass through so that the electromotive force (OCV) drops; moreover, the nap or indentations and projections on the surfaces of the carbon fiber collector layers 40 and 41 penetrate through the films 30 and 31 so that there is a danger of damage to the catalyst electrode layers 20 and 21. Furthermore, the abovementioned mean thickness is determined by dividing the cross-sectional areas of the films 30 and 31 by the bottom-side lengths of these films.

The moisture permeability of the humidity adjusting films 30 and 31 is 1200 g/m²hr or greater (preferably 1500 g/m²hr or greater, and even more preferably 1700 g/m²hr or greater), but no greater than 4000 g/m²hr (preferably 3800 g/m²hr or less, and even more preferably 3700 g/m²hr or less). Both dry-up and flooding can be prevented over a broad range of operating conditions only be controlling the film thickness and moisture permeability to the abovementioned ranges. If the moisture permeability exceeds the upper limit of the abovementioned range of numerical values, dry-up may occur depending on the operating conditions; on the other hand, if the moisture permeability is smaller than the lower limit of the abovementioned range of numerical values, flooding may occur depending on the operating conditions. Furthermore, the moisture

Specifically, the humidity adjusting film of the present invention is constructed from a conductive carbonaceous powder and a polytetrafluoroethylene, the moisture permeability of this film as measured by the method stipulated in JIS L 1099 (B-1) is 1200 to 4000 g/m²hr, and the mean thickness of the film is 5 to 100 µm. Furthermore, the humidity adjusting film of the present invention is used by being sandwiched between the catalyst electrode layers and carbon fiber collector layers of a solid polymer type fuel cell.

In this humidity adjusting film, the polytetrafluoroethylene ordinarily constitutes 5 to 60 mass% of the total of the conductive carbonaceous powder and polytetrafluoroethylene, and the through-type electrical resistance as measured by the four-terminal method (1 kHz alternating current, pressure between terminals 981 kPa, room temperature) is ordinarily 30 mΩcm² or less. It is desirable that the humidity adjusting film be subjected to a calendering treatment.

When used in a single cell, the abovementioned humidity adjusting film may also be formed into a composite film by laminating and integrating this film with various types of layers beforehand. For example, the humidity adjusting film of the present invention may be laminated and integrated with a catalyst electrode layer (humidity adjusting film equipped with an electrode function), the humidity adjusting film of the present invention may be laminated and integrated with a carbon fiber collector layer (gas diffusion layer) to form a laminated type gas diffusion layer, or a catalyst electrode layer may be laminated and integrated with the humidity adjusting film surface of this laminated type gas diffusion layer (gas diffusion layer equipped with an electrode function). Furthermore, the humidity adjusting film of the present invention may be a film in which a polymer electrolyte membrane is sandwiched between a pair of catalyst electrode layers from both sides, and then further sandwiched between a pair of the humidity adjusting films of the present invention from both sides (membrane electrode composite body), or may be a film in which gas-permeable carbon fiber collector layers are laminated with both sides of such a membrane electrode composite body (gas diffusion layer integrated type membrane electrode composite body).

Furthermore, in the respective composite films described above, the carbon fiber collector layer(s) may be subjected to a water-repellent treatment by means of a fluororesin. Moreover, the thickness of the carbon fiber collector layer(s) is (for example) approximately 100 to 500 µm. permeability is the value determined by the method stipulated in Japanese Industrial Standard (JIS) L 1099 (B-1).

The mean thickness and moisture permeability of the abovementioned humidity adjusting films 30 and 31 can be adjusted by appropriately combining the calendering and drawing described later.

Furthermore, it is necessary that the humidity adjusting films 30 and 31 be electrically connected to the catalyst electrode layers 20 and 21 and carbon fiber collector layers (gas diffusion layers) 40 and 41. For example, the through-type electrical resistance of the humidity adjusting films 30 and 31 is 30 mΩcm² or less, preferably 20 mΩcm² or less, and even more preferably 15 mΩcm² or less. A smaller through-type electrical resistance is more desirable, and there are no particular restrictions on the lower limit of this resistance; ordinarily, however, this lower limit is approximately 1 mΩcm² (e.g., the value used is approximately 3 mΩcm²). Furthermore, the abovementioned through-type electrical resistance is the value determined by the four-terminal method (1 kHz alternating current, pressure between terminals: 981 kPa, room temperature).

The above mentioned humidity adjusting films 30 and 31 are constructed from a conductive carbonaceous powder and a polytetrafluoroethylene (PTFE), and show conductivity, air permeability and hydrophobic properties overall. The abovementioned conductive carbonaceous powder is used to obtain the conductivity, air permeability and hydrophobic properties of the humidity adjusting films 30 and 31; for example, various types of carbon black such as furnace black, lamp black, thermal black, acetylene black or the like, or graphite or the like, may be used. These substances may be used singly, or in mixtures consisting of two or more substances. A desirable conductive carbonaceous powder is acetylene black or a mixture containing acetylene black. Acetylene black and mixtures containing acetylene black are superior in terms of conductivity, water-repellent properties and chemical stability.

Furthermore, the abovementioned PTFE is used to bind the conductive carbonaceous powder so as to form a film. This material is also desirable in that the material can be used to cover the surface of the conductive carbonaceous powder so as to endow this powder with water-repellent properties.

For example, the amount of PTFE used is approximately 5 mass% or greater (preferably 7 mass% or greater, and even more preferably 10 mass% or greater), but no more than 60 mass% (preferably 50 mass% or less, and even more preferably 45 mass% or less), relative to the total amount of the conductive carbonaceous powder and polytetrafluoroethylene.

Furthermore, in addition to the abovementioned PTFE, the humidity adjusting films 30 and 31 may also contain other fluororesins if necessary. Examples of such fluororesins include copolymers of tetrafluoroethylene (copolymers with monomers that contain fluorine atoms such as hexafluoropropylene or the like, or monomers that do not contain fluorine atoms such as ethylene or the like), polyvinylidene fluoride resins, polychlorotrifluoroethylene resins and the like.

The humidity adjusting films 30 and 31 of the present invention can be manufactured by forming into a film a mixture (kneaded mixture, slurry or the like) obtained by uniformly mixing the [abovementioned] conductive carbonaceous powder, PTFE and (if necessary) other fluororesins.

There are no particular restrictions on the details of the mixing method or film forming method used; these methods can be worked with appropriate changes being made by a person skilled in the art. For instance, the following may be cited as an example of the manufacturing method used. For example, the abovementioned mixture (kneaded mixture, slurry or the like) can be prepared by a universally known method. For example, a kneaded mixture can be prepared by a dry method or a wet method, and a slurry can be prepared using a wet method. A dry method is a method in which a fine conductive carbonaceous powder and a fine powder of a PTFE are mixed. Specifically, in such a dry method, the abovementioned fine powders are placed in an appropriate mixer (e.g., a V blender), and are agitated and mixed; furthermore, an appropriate working assistant (e.g., mineral spirits) is added and absorbed by the abovementioned mixture, so that a kneaded mixture is prepared. Furthermore, the fine conductive carbonaceous powder can be obtained by pulverizing a conductive carbonaceous powder using a universally known pulverizer (e.g., ball mill, pin mill, homogenizer or the like), and it is simple to use a commercially marketed fine powder as the finely powdered PTFE. Furthermore, in the working assistant absorption process, it is recommended that the system be heated following the addition of the working assistant to the mixture (e.g., to a temperature of approximately 40 to 60°C, especially approximately 50°C).

On the other hand, a wet method is a method in which the conductive carbonaceous powder and PTFE are mixed in water. Specifically, in such a wet method, a slurry (ink) can be prepared by mixing in water (in the presence of a surfactant) the raw materials (conductive carbonaceous powder, PTFE) that have been finely divided to such a degree that dispersion is possible. Furthermore, if a mechanical shear force is applied to the slurry (ink) or a precipitating agent (alcohol or the like) is added during the abovementioned mixing, the conductive carbonaceous powder and PTFE will co-precipitate. The resulting co-precipitate is recovered by filtration and dried; then, a kneaded mixture can be prepared by absorbing an appropriate working assistant in the dried product in the same manner as in the abovementioned dry method. Furthermore, although a fine conductive carbonaceous powder can be prepared in the same manner as in the abovementioned dry method, it is simpler to add the powder to water together with a surfactant, and then disperse the powder in liquid while pulverizing the powder using a pulverizing means for use in liquid (e.g., a homogenizer or the like). Furthermore, it is also simple to use a commercially marketed aqueous PTFE dispersion as the PTFE.

A PTFE paste extrusion method can be used to form the mixture into a film. Specifically, various universally known methods such as a method in which the mixture is pelletized by means of preliminary molding, and the pellets are extrusion-molded from a die or the like and dried (extrusion molding method), a method in which such pellets are extruded into the form of a cord by means of an extruder, and this cord-form substance is rolled between two rolls and dried (bead rolling method), or the like can be utilized.

The thickness and moisture permeability of the film can be adjusted by appropriately devising the abovementioned film formation process. For example, in cases where the primary molded film is thick in the extrusion molding method or bead calendering method, calendering with rolls can be repeated until the film reaches a specified thickness. Furthermore, depending on the conditions of manufacture, there may be cases in which the density becomes excessively high so that the moisture permeability drops. In such cases, however, the moisture permeability can be increased by calendering. Thus, the film thickness and moisture permeability can be adjusted by appropriately combining calendering and drawing. On the other hand, in the case of a coating method, coating and drying can be repeated until the film reaches a specified thickness, and calendering and drawing may be appropriately used in order to achieve a further adjustment of the thickness and moisture permeability. Furthermore, the electrical resistance in the direction of thickness of the film can also be adjusted by calendering and drawing, as can the air permeability.

Furthermore, in the drying process of the extrusion molding method or bead calendering method, it is recommended that the system be heated to a temperature that allows the removal of the working assistant (mineral spirits or the like) by volatilization (e.g., approximately 150 to 300°C, and especially approximately 200°C). Furthermore, in the drying process of the coating method, it is recommended that the system be heated to a temperature that allows the removal of water by volatilization (e.g., approximately 100 to 300°C, and especially approximately 120°C).

Furthermore, in the drying process, it is also recommended that organic impurities (e.g., surfactants used in the wet method) be carbonized and thus rendered harmless. If surfactants remain, the moisture permeability of the humidity adjusting film is conspicuously increased; however, the moisture permeability can be lowered to an appropriate level by carbonizing such surfactants. For example, the carbonization temperature is approximately 300 to 400°C (and especially approximately 350°C). Furthermore, the method used to remove organic impurities is not limited to the abovementioned carbonization treatment; various methods may be appropriately used in accordance with the types of impurities involved. For example, depending on the type of surfactant used, it may be possible to remove the surfactant by volatilization by heating the system to a temperature of 250°C or greater; moreover, removal by extraction using a solvent (e.g., an alcohol or the like) is also possible.

### Single Cell

As is shown in Fig. 2, the abovementioned humidity adjusting films 30 and 31 of the present invention are used to form a single cell by being combined with other single cell constituent layers (polymer electrolyte membrane 10, anode side catalyst electrode layer 20, cathode side catalyst electrode layer 21, anode side carbon fiber collector layer 40, cathode side carbon fiber collector layer 41, separators 60 and 61, and the like). Furthermore, both of the humidity adjusting films 30 and 31 may be used as shown in Fig. 2; however, it would also be possible to use only one of these humidity adjusting films (especially the cathode side humidity adjusting film 31).

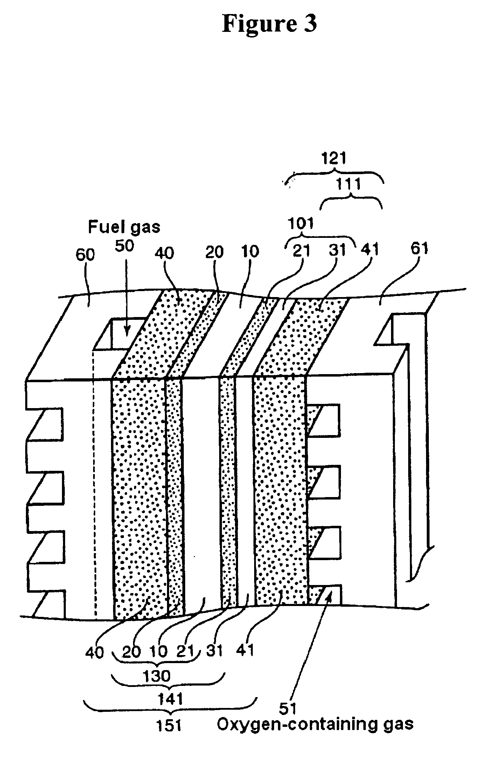

Fig. 3 is schematic perspective view showing an example in which a humidity adjusting film 31 of the present invention is used only on the cathode side. In this example shown in Fig. 3, the humidity adjusting film 31 of the present invention is laminated on the inside of the cathode side carbon fiber collector layer 41; a conventional universally known film is used as the anode side carbon fiber collector layer 40, without any humidity adjusting film being laminated. Even in the case of such a single cell, since a humidity adjusting film 31 is sandwiched between the anode side catalyst electrode layer 21 and anode side carbon fiber collector layer 41, both dry-up and flooding can be prevented over a broad range of operating conditions.

Furthermore, conventional universally known layers can be used as the other respective single cell constituent layers described above; however, the following layers are recommended for use.

### 1) Polymer Electrolyte Membrane 10

A perfluoro type electrolyte, hydrocarbon type electrolyte or the like is preferable for use in the polymer electrolyte membrane 10; in particular, a perfluoro type electrolyte membrane is especially desirable. A sulfonic acid type electrolyte membrane (e.g., Nafion (registered trademark, manufactured by du Pont Co.), GORE-SELECT (registered trademark, manufactured by Japan Gore-Tex Inc.) or the like) is preferable, and a perfluorosulfonic acid resin type electrolyte membrane reinforced by a drawn porous polytetrafluoroethylene (GORE-SELECT (registered trademark, manufactured by Japan Gore-Tex Inc.) or the like) is especially desirable.

For example, it is recommended that the EW (equivalent weight) of the polymer electrolyte membrane 10 be approximately 700 or greater (preferably 900 or greater), but no more than 1500 (preferably 1300 or less). Furthermore, for example, it is desirable that the thickness of the polymer electrolyte membrane be approximately 10 µm or greater (preferably 15 µm or greater), but no greater than 100 µm (preferably 60 µm or less)

### 2) Catalyst Electrode Layers 20 and 21

Conventional universally known layers can be used as the catalyst electrode layers. For example, layers manufactured from a paste-form ink obtained by uniformly mixing fine particles of conductive carbon (mean particle size: approximately 20 to 100 nm) such as carbon black or the like which has fine particles of platinum or an alloy of platinum with some other metal (e.g., Ru, Rh, Mo, Cr, and Fe) (mean particle size 10 nm or less) supported on the surface, and a liquid containing a perfluorosulfonic acid resin, in an appropriate solvent (e.g., an alcohol), can be used.

It is desirable that the amount of platinum (calculated as metallic platinum) in the anode side catalyst electrode layer 20 (fuel pole) be approximately 0.1 to 0.5 mg/cm², and that the amount of platinum (calculated as metallic platinum) in the cathode side catalyst electrode layer 21 (air pole) be approximately 0.3 to 0.8 mg/cm².

For example, the thickness of the catalyst electrode layer is approximately 5 to 30 µm.

### 3) Carbon Fiber Collector Layers 40 and 41

The carbon fiber collector layers 40 and 41 must be at least gas-permeable (air-permeable) and conductive. Woven fabrics, nonwoven fabrics (felts or the like obtained by entangling carbon fibers), papers (carbon papers) and the like constructed from carbon materials are commonly used as such carbon fiber collector layers 40 and 41. In cases where a comprehensive improvement in the conductivity, air permeability, water permeability, corrosion resistance and the like of the carbon fiber collector layers 40 and 41 is to be obtained, a sheet (woven fabric, paper or the like) that is graphitized by subjecting a sheet-form substance obtained by the fiber manufacture or papermaking of carbon fibers using petroleum pitch, phenol, cellulose, acrylonitrile fibers or the like as a raw material to a heat treatment at a high temperature (e.g., 1500°C or greater, preferably 2000°C or greater) in an inert gas atmosphere or the like, is ideal for use as the carbon fiber collector layers 40 and 41. In the case of nonwoven fabrics (felts or the like), the fiber end surfaces protrude in the direction thickness, so that when such layers are laminated with other layers, or when the single cells are stacked, the polymer electrolyte membrane 10 or catalyst electrode layers 20 and 21 tend to be scratched by these fiber end surfaces. In the case of woven fabrics or papers on the other hand, the fiber end surfaces do not protrude, so that damage to the polymer electrolyte membrane 10 or catalyst electrode layers 20 and 21 can be prevented to a great extent. Furthermore, woven fabrics or papers consisting of graphite fibers obtained from an acrylonitrile raw material are superior in terms of mechanical strength, and are therefore especially desirable.

If necessary, furthermore, the carbon fiber collector layers 40 and 41 may be subjected to a water-repellent treatment by means of a fluororesin. This water-repellent treatment refers to a treatment in which the carbon fiber collector layers 40 and 41 are immersed in a liquid containing a fluororesin, and are then dried. Furthermore, the abovementioned immersion and drying may be repeated until the desired amount of fluororesin is caused to adhere [to these layers]. An aqueous dispersion of a fluororesin using a surfactant can be used as the abovementioned liquid containing a fluororesin, and the abovementioned commercially marketed aqueous PTFE dispersion is also one desirable example of such a liquid containing a fluororesin. If water-repellent properties are to be securely imparted to the carbon fiber collector layers 40 and 41, it is recommended that the amount of fluororesin in the carbon fiber collector layers 40 and 41 be set at (for example) 0.5 mass% or greater, preferably 5 mass% or greater, and even more preferably 10 mass% or greater. On the other hand, if the amount of fluororesin is excessive, the ability to discharge water is reduced, so that flooding tends to occur. Accordingly, for example, it is recommended that the amount of fluororesin contained in the carbon fiber collector layers 40 and 41 be set at approximately 65 mass% or less, preferably 50 mass% or less, and even more preferably 30 mass% or less.

There are no particular restrictions on the drying temperature used for the carbon fiber collector layers 40 and 41 immersed in the abovementioned liquid containing a fluororesin; for example, this temperature may be approximately 150°C or less. Furthermore, it is desirable that any surfactant contained in the abovementioned liquid containing a fluororesin be appropriately removed. A method similar to the surfactant removal treatment method used in the manufacture of the humidity adjusting film (especially removal by volatilization or a carbonization treatment) can be used as this removal treatment method. Furthermore, a carbonization treatment not only renders surfactants harmless, but also has the effect of fixing the fluororesin in the carbon fiber collector layers 40 and 41.

For example, the thickness of the carbon fiber collector layers 40 and 41 is 100 to 500 µm.

### Composite Film

Furthermore, the humidity adjusting films 30 and 31 of the present invention may be used without modification in single cells, or may be used in single cells after being formed into composite films by laminating and integrating these humidity adjusting films 30 and 31 beforehand with other functional layers (polymer electrolyte membrane 10, catalyst electrode layers 20 and 21, carbon fiber collector layers (gas diffusion layers) 40 and 41 or the like). For instance, the following may be cited as examples of desirable composite films.
1) Humidity adjusting films 100 and 101 equipped with an electrode function in which humidity adjusting films 30 and 31 and catalyst electrode layers 20 and 21 are laminated and integrated (see Figs. 2 and 3).
2) Laminated type gas diffusion layers 110 and 111 in which humidity adjusting films 30 and 31 and carbon fiber collector layers (gas diffusion layers) 40 and 41 are laminated and integrated (see Figs. 2 and 3).
3) Gas diffusion layers 120 and 121 equipped with an electrode function in which carbon fiber collector layers 40 and 41 are laminated with humidity adjusting films 30 and 31 on one surface of these humidity adjusting films 30 and 31, and catalyst electrode layers 20 and 21 are laminated with these humidity adjusting film 30 and 31 on the other surface.
4) A fuel cell membrane electrode assembly 140 in which a membrane electrode assembly 130 that is integrated by sandwiching a polymer electrolyte membrane 10 between a pair of catalyst electrode layers 20 and 21 from both sides is further sandwiched from both sides by a pair of humidity adjusting films 30 and 31, and is thus integrated (see Fig. 2).
5) A gas diffusion layer integrated type membrane electrode assembly 150 in which carbon fiber collector layers (gas diffusion layers) 40 and 41 are laminated and integrated on both outer sides of the abovementioned membrane electrode assembly 140 (see Fig. 2).
6) A membrane electrode assembly 141 in which a humidity adjusting film 31 is laminated and integrated on the cathode side of a membrane electrode assembly 130 formed by sandwiching a polymer electrolyte membrane 10 from both sides between an anode catalyst electrode layer 20 and a cathode catalyst electrode layer 21 so that these layers are integrated (see Fig. 3).
7) A gas diffusion layer integrated type assembly 151 in which carbon fiber collector layers (gas diffusion layers) 40 and 41 are laminated and integrated on both outer sides of the abovementioned gas diffusion layer integrated type electrode assembly 141 (see Fig. 3).

There are no particular restrictions on the means used to laminate and integrate the respective layers; conventional universally known lamination means (e.g., lamination using an adhesive agent, lamination by heating and pressing or the like) may be appropriately used; however, if gas permeability is taken into account, it is desirable to perform a heating and pressing treatment. Especially in cases where humidity adjusting films 30 and 31 and carbon fiber collector layers 40 and 41 that have been subjected to a water-repellent treatment are laminated, a drop in the water-repellent properties can also be prevented by performing a heating and pressing treatment. Furthermore, in cases where the humidity adjusting film 30 and 31 and carbon fiber collector layers 40 and 41 are laminated, it is most highly recommended to perform pressing while heating the films to a temperature of approximately 300 to 400°C (especially about 350°C). In cases where the humidity adjusting films 30 and 31 are manufactured by a wet method, some surfactant remains, and some surfactant also remains in cases where the carbon fiber collector layers 40 and 41 are subjected to a water-repellent treatment. If pressing is performed while heating the films to a temperature of approximately 300 to 400°C (and especially about 350°C), the carbonization of surfactants and the lamination and integration of the humidity adjusting films 30 and 31 and carbon fiber collector layers 40 and 41 can be accomplished by performing a single treatment, which is convenient.

Furthermore, an assembly obtained by directly coating a polymer electrolyte membrane 10 with the abovementioned paste-form ink (used to form the catalyst electrode layers 20 and 21) using a printing apparatus such as a doctor blade, bar coater or the like, or an assembly obtained by coating the surface of a smooth film with good mold release characteristics (consisting of a polytetrafluoroethylene, polypropylene or the like) beforehand with the abovementioned paste-form ink using a printing apparatus such as a doctor blade, bar coater or the like, and drying this coating, and then transferring the coating layer to a polymer electrolyte membrane 10 using a hot press (decal method) or the like, may be used as the abovementioned membrane electrode assembly 130. Furthermore, "PRIMEA" (registered trademark) which can be obtained from Japan Gore-Tex Inc. may also be used as the membrane electrode assembly (MEA) 130.

The humidity adjusting films 30 and 31 of the present invention can prevent both dry-up and flooding over a broad range of operating conditions. Accordingly, these humidity adjusting films can be used in various types of fuel cells, both in mobile bodies (automobiles or the like) and for household use. Especially in the case of mobile bodies (automobiles or the like) there are frequent fluctuations in the load of the fuel cell during starting, driving and stopping, so that desirable operating conditions of the fuel cell may vary according to the operating mode; however, the humidity adjusting films 30 and 31 of the present invention are effective in preventing both dry-up and flooding under any operating conditions.

Below, the present invention will be described more concretely in terms of working examples. However, the present invention is not limited in any way by the following working examples; the present invention can of course be worked with appropriate alterations being made within limits that agree with the main point of the invention as described above and hereafter. All such alterations are included in the technical scope of the present invention.

### Working Example 1

Acetylene black (a conductive carbonaceous powder) was placed gently in water so as to prevent scattering, and water was absorbed by the acetylene black while these ingredients were mixed using an agitator. Next, the acetylene black was agitated and dispersed using a homogenizer, thus producing an aqueous dispersion of acetylene black.

A specified amount of an aqueous dispersion of PTFE (commercial name: D1-E, manufactured by Daikin Industries Ltd.) was added to this aqueous dispersion of acetylene black, and these ingredients were gently stirred by means of an agitator, thus producing a uniform mixed dispersion. Next, the rotation of the agitator was increased, thus causing the co-precipitation of PTFE and acetylene black. The co-precipitate was filtered and collected, and was thinly spread in a stainless steel vat. This co-precipitate was then dried for one day and night at 120°C, thus producing a mixed powder of acetylene black (conductive carbonaceous powder) and PTFE.

Mineral spirits (manufactured by Idemitsu Kosan Co., Ltd., commercial name: IP Solvent 1016) were added to this mixed powder as a working assistant, the powder was pelletized using a preliminary molding machine, and the pellets were extruded into the form of a tape using an extruder; a film was then formed by further calendering this tape using a double roll. Furthermore, calendering was performed a multiple number of times using this double roll, so that the thickness and density of the film were adjusted. The rolled product was dried for 8 hours in a drier at 200°C so that the mineral spirits were removed, and a humidity adjusting film was then obtained by performing a heat treatment for 5 minutes at 350°C.

Details concerning the humidity adjusting film of Working Example 1 are as shown in Table 1. The mass ratio of acetylene black to PTFE was 60/40, the mean thickness was 25 µm, the moisture permeability was 3300 g/m²hr, and the through-type resistance was 8.2 mΩcm².

Furthermore, the abovementioned mass ratio, thickness, moisture permeability and through-type resistance were values that were determined as shown below.

### Mass Ratio

The mass ratio was calculated on the basis of the amount of acetylene black used and the solid content of the PTFE aqueous dispersion.

### Mean Thickness

The cross-sectional area of the humidity adjusting film was measured using an optical microscope, and the mean thickness was determined by dividing this cross-sectional area by the length of the lower side.

### Moisture Permeability

The moisture permeability was determined by the method stipulated in JIS L 1099 (B-1).

### Through-type Resistance

The humidity adjusting film was clamped between a pair of gold-plated metal blocks (area 2 cm²) (pressure: 981 kPa (10 kgf/cm²), four-terminal method), and the resistance value in a case where a 1 kHz alternating current was caused to flow (current: 100 mA) was measured using a mΩ meter (manufactured by Adex Co., commercial name: Digital Battery mΩ Meter (Model AX-126B). The through-type resistance was then determined using the following equation:

Through-type resistance (mΩcm²) = measured resistance value (mΩ) × 2 (cm²)

Working Examples 2 through 5 and Comparative Examples 1 through 5

Humidity adjusting films were obtained in the same manner as described in Working Example 1, except for the fact that the type of conductive carbonaceous powder, ratio of conductive carbonaceous powder to PTFE, film thickness, moisture permeability, through-type resistance and the like were altered. Details of these alterations are as shown in Tables 1 and 2. Furthermore, in Tables 1 and 2, "Vulcan XC72-R" (commercial name) manufactured by Cabot Co. was used as the "furnace black".

### Example of Manufacture

The single cell shown in Fig. 2 was manufactured using the humidity adjusting films of the working examples and comparative examples obtained as described above. Furthermore, these single cells were manufactured as follows.

### Laminated type Gas Diffusion Layers 110 and 111

A carbon paper (commercial name T-GP-H060, manufactured by Toray) was immersed in a treatment solution adjusted to a PTFE concentration of 10% by diluting an aqueous dispersion of PTFE (commercial name: D1-E, manufactured by Daikin Industries Ltd.) with water, and was then pulled out of this solution. After the excess treatment solution on the surface of the carbon paper was wiped away, the carbon paper was dried for 1 hour at 150°C, and was then subjected to a heat treatment for 2 hours at 350°C, thus producing carbon fiber collector layers 40 and 41 (PTFE content: 18 mass%) subjected to a water-repellent treatment.

The humidity adjusting films 30 and 31 obtained in Working Examples 1 through 5 or Comparative Examples 1 through 5 were superimposed with the abovementioned carbon fiber collector layer 40 so that no wrinkles were generated, and were subjected to a pressing treatment by means of a double roll heated to 300°C, thus producing laminated type gas diffusion layers 110 and 111.

### Membrane Electrode Assembly 130

"PRIMEA" (registered trademark, manufactured by Japan Gore-Tex Inc.) obtained by bonding catalyst layers 20 and 21 containing 0.3 mg/cm² platinum to both surfaces of "GORE-SELECT" (registered trademark), commercial name of a product manufactured by Japan Gore-Tex Inc. with a thickness of 30 µm (polymer electrolyte membrane 10), was used as the membrane electrode assembly 130.

### Single Cell

The abovementioned laminated type gas diffusion layers 110 and 111 were disposed on both sides of the abovementioned membrane electrode assembly 130, and a gasket (not shown in the figures) was superimposed on the outer circumferential part of the polymer electrolyte membrane 10; then, this assembly was further clamped from both sides by a pair of graphite separators 60 and 61 in which gas flow passages were formed. Next, this assembly was clamped by two stainless steel end plates (not shown in the figures) equipped with collector plates, thus producing a single cell.

Hydrogen gas and air were supplied to the single cell thus obtained, and this cell was operated under various conditions A through D while the gas and air heating temperatures and air utilization rate (air flow rate) were varied as shown in Tables 1 and 2. The voltage across the terminals was measured at the open-circuit voltage (OCV) and with the current density set at 1.4 A/cm². Furthermore, the cell temperature (80°C) and the fuel hydrogen utilization rate (80%) were constant.

The results obtained are shown in Tables 1 and 2.

**Table 1 (Part 1)**

| | Humidity adjusting film | | | | | |
|---|---|---|---|---|---|---|
| | Carbon powder | PTFE | Ratio of carbon powder/PTFE | Mean thickness (µm) | Moisture permeability (g/m²hr) | Internal resistance (mΩcm²) |
| Working Example 1 | Acetylene black | D1-E | 60/40 | 25 | 3300 | 8.2 |
| Working Example 2 | Acetylene black | D1-E | 75/25 | 50 | 2200 | 12.5 |
| Working Example 3 | Acetylene black | D1-E | 80/20 | 60 | 3600 | 8.8 |
| Working Example 4 | Furnace black | D1-E | 90/10 | 25 | 1900 | 5.8 |
| Working Example 5 | Furnace black | D1-E | 80/20 | 60 | 3500 | 5.9 |

**Table 1 (Part 2)**

| | Operating conditions | | | | Operating results | |
|---|---|---|---|---|---|---|
| | No. | Hydrogen humidification (relative humidity %) | Air humidification (relative humidity %) | Air utilization rate (%) | OCV (mV) | Terminal voltage at 1.4 A/cm² (mV) |
| Working Example 1 | A | 100 | 100 | 40 | 927 | 606 |
| | B | 100 | 100 | 70 | 926 | 537 |
| | C | 40 | 40 | 40 | 948 | 506 |
| | D | 40 | 40 | 70 | 947 | 481 |
| Working Example 2 | A | 100 | 100 | 40 | 953 | 472 |
| | B | 100 | 100 | 70 | 951 | 251 |
| | C | 40 | 40 | 40 | 979 | 354 |
| | D | 40 | 40 | 70 | 980 | 250 |
| Working Example 3 | A | 100 | 100 | 40 | 940 | 527 |
| | B | 100 | 100 | 70 | 944 | 293 |
| | C | 40 | 40 | 40 | 980 | 372 |
| | D | 40 | 40 | 70 | 976 | 256 |
| Working Example 4 | A | 100 | 100 | 40 | 942 | 536 |
| | B | 100 | 100 | 70 | 952 | 367 |
| | C | 40 | 40 | 40 | 989 | 317 |
| | D | 40 | 40 | 70 | 987 | 310 |
| Working Example 5 | A | 100 | 100 | 40 | 929 | 527 |
| | B | 100 | 100 | 70 | 930 | 347 |
| | C | 40 | 40 | 40 | 949 | 446 |
| | D | 40 | 40 | 70 | 947 | 352 |

**Table 2 (Part 1)**

| | Humidity adjusting film | | | | | |
|---|---|---|---|---|---|---|
| | Carbon powder | PTFE | Ratio of carbon powder/PTFE | Mean thickness (µm) | Moisture permeability (g/m²hr) | Internal resistance (mΩcm²) |
| Comparative Example 1 | Acetylene black | D1-E | 60/40 | 3 | 4000 | 5.4 |
| Comparative Example 2 | Acetylene black | D1-E | 70/30 | 120 | 2050 | 27 |
| Comparative Example 3 | Acetylene black | D1-E | 70/30 | 60 | 600 | 15 |
| Comparative Example 4 | Furnace black | D1-E | 70/30 | 60 | 4100 | 10.4 |
| Comparative Example 5 | Furnace black | D1-E | 60/40 | 110 | 1050 | 6.4 |

**Table 2 (Part 2)**

| | Operating Conditions | | | | Operating results | |
|---|---|---|---|---|---|---|
| | No. | Hydrogen humidification | Air humidification (relative humidity %) | Air Air utilization rate (%) | OCV (mV) | Terminal voltage at 1.4 A/cm² (mV) |
| Comparative Example 1 | A | 100 | 100 | 40 | 900 | 528 |
| | B | 100 | 100 | 70 | 901 | 301 |
| | C | 40 | 40 | 40 | 913 | 373 |
| | D | 40 | 40 | 70 | 915 | 241 |
| Comparative Example 2 | A | 100 | 100 | 40 | 940 | 466 |
| | B | 100 | 100 | 70 | 936 | 366 |
| | C | 40 | 40 | 40 | 958 | unmeasurable |
| | D | 40 | 40 | 70 | 960 | unmeasurable |
| Comparative Example 3 | A | 100 | 100 | 40 | 950 | 296 |
| | B | 100 | 100 | 70 | 953 | unmeasurable |
| | C | 40 | 40 | 40 | 962 | 347 |
| | D | 40 | 40 | 70 | 960 | 233 |
| Comparative Example 4 | A | 100 | 100 | 40 | 948 | 512 |
| | B | 100 | 100 | 70 | 947 | 295 |
| | C | 40 | 40 | 40 | 984 | 113 |
| | D | 40 | 40 | 70 | 980 | unmeasurable |
| Comparative Example 5 | A | 100 | 100 | 40 | 942 | 424 |
| | B | 100 | 100 | 70 | 940 | unmeasurable |
| | C | 40 | 40 | 40 | 963 | 311 |
| | D | 40 | 40 | 70 | 961 | unmeasurable |

Comparative Example 1 showed a drop in OCV possibly because of a tendency for hydrogen gas to leak due to excessive thinness of the humidity adjusting film. In Comparative Examples 2 through 5, the humidity adjusting film was too thick, or the moisture permeability was inappropriate; accordingly, when power was generated at a high output (1.4 A/cm²), flooding or dry-up occurred under some of the operating conditions A through D, so that measurement of the voltage across the terminals was impossible. To describe this more accurately, dry-up occurred under the operating conditions C and D in Comparative Example 2, flooding occurred under the operating conditions B in Comparative Example 3, and dry-up occurred under the operating conditions C and D in Comparative Example 4. In particular, both flooding (under the operating conditions B) and dry-up (under the operating conditions D) occurred in Comparative Example 5.

On the other hand, in the case of the humidity adjusting films of Working Examples 1 through 5, since both the film thickness and moisture permeability were appropriate, it was possible to generate power over a broad range of operating conditions without any occurrence of flooding or dry-up, regardless of whether the humidification was low (40%) or high (100%), and regardless of whether the gas flow rate was high (air utilization rate 40%) or low (air utilization rate 70%).

While particular embodiments of the present invention have been illustrated and described herein, the present invention should not be limited to such illustrations and descriptions. It should be apparent that changes and modifications may be incorporated and embodied as part of the present invention within the scope of the following claims.

## Claims

1. A humidity adjusting film for use in a solid polymer type fuel cell, said humidity adjusting film adapted to be sandwiched between a catalyst electrode layer and a gas-permeable carbon fiber collector layer, wherein said film comprises a conductive carbonaceous powder and polytetrafluoroethylene, the moisture permeability of said film is 1200 to 4000 g/m²• hr, and the mean thickness of the film is 5 to 100 µm.

2. The humidity adjusting film according to Claim 1, wherein the through-type electrical resistance of the film is 30 mΩcm² or less.

3. The humidity adjusting film according to Claim 1 or 2, wherein the film is calendered.

4. The humidity adjusting film according to Claim 1, 2 or 3, wherein the amount of polytetrafluoroethylene is 5 to 60 mass% relative to the total amount of conductive carbonaceous powder and polytetrafluoroethylene.

5. The humidity adjusting film of Claim 1, further comprising a catalyst electrode layer and wherein said film and said catalyst electrode layer are integrated by lamination.

6. The humidity adjusting film according to Claim 1, 2, 3 or 4, further comprising a gas-permeable carbon fiber collector layer and wherein said film and said gas-permeable carbon fiber collector layer are integrated by lamination.

7. The humidity adjusting film of Claim 6, wherein said carbon fiber collector layer is subjected to a water-repellency treatment using a fluororesin.

8. The humidity adjusting film of Claim 6 or 7, wherein the thickness of said carbon fiber collector layer is 100 to 500 µm.

9. A gas diffusion electrode, wherein a catalyst electrode layer is integrated by lamination on a surface of the humidity adjusting film of the laminated gas-permeable carbon fiber collector layer according to any of Claim 6 to 8.

10. A fuel cell membrane electrode assembly constructed from
a polymer electrolyte membrane; and
a pair of electrode layers that sandwich this polymer electrolyte membrane from both sides, wherein
a pair of the humidity adjusting films according to any of Claims 1 to 4 laminated so as to sandwich said electrode layers from both outer sides.

11. A gas diffusion layer integrated type membrane electrode assembly, wherein gas-permeable carbon fiber collector layers are laminated on both outer sides of the membrane electrode assembly according to Claim 10.
